# FASCICULE DE BREVET EUROPEEN

(11) **EP 0 920 660 B1**
(45) Date de publication et mention de la délivrance du brevet: **03.09.2008**
(21) Numéro de dépôt: 98933715.9
(22) Date de dépôt: 25.06.1998
(51) Int. Cl.: G06F 21/22, G06F 9/46

(54) **MICROPROCESSEUR OU MICROCALCULATEUR IMPRÉVISIBLE**
UNVORHERSAGBARER MIKROPROZESSOR ODER MIKRORECHNER
UNPREDICTABLE MICROPROCESSOR OR MICROCOMPUTER

(30) Priorité: 26.06.1997 FR 9707995
(43) Date de publication de la demande: 09.06.1999
(73) Titulaire: CP8 TECHNOLOGIES, 78431 Louveciennes (FR)
(72) Inventeur: UGON, Michel, F-78310 Maurepas (FR)
(74) Mandataire: Cassagne, Philippe M.J.
(86) Numéro de dépôt international: PCT/FR1998/001343
(87) Numéro de publication internationale: WO 1999/000718

(56) Documents cités:
- EP-A- 0 129 693
- EP-A- 0 135 753
- EP-A- 0 417 817
- EP-A- 0 448 262
- EP-A- 0 463 855

## Description

La présente invention concerne un microprocesseur ou microcalculateur imprévisible.

Il est connu que les microprocesseurs ou les microcalculateurs exécutent séquentiellement des instructions successives d'un programme enregistré dans une mémoire, en synchronisme avec un ou plusieurs signaux de cadencement référencés par rapport à un des signaux d'horloge fournis au microprocesseur ou au microcalculateur, soit en interne, soit en externe.

Il s'est avéré possible de connaître les différentes phases de cette exécution de programme en fonction du temps puisque l'exécution des instructions s'effectue sequentiellement suivant un processus prédéterminé par ce programme, en général en synchronisme avec les signaux d'horloge qui cadencent régulièrement le processeur. En effet, tout programme se traduit par une suite d'instructions qui doivent être exécutées successivement dans un ordre connu à l'avance, les instants de début et de fin de chaque instruction étant parfaitement connus car elles s'exécutent suivant un processus prédéterminé en fonction du temps. Il est donc en principe possible de savoir quelle est l'instruction qui s'exécute à un moment donné dans l'unité de traitement du processeur puisque le programme qui se déroule est constitué de cette suite prédéterminée d'instructions.

On peut, par exemple déterminer le nombre d'instructions exécutées à partir du lancement du programme, du démarrage de l'unité de traitement, ou encore du temps qui s'est écoulé depuis un événement, un signal de référence externe ou interne, ou encore la remise à zéro du processeur.

Cette possibilité de pouvoir observer le déroulement d'un programme dans un microprocesseur ou un microcalculateur est un inconvénient majeur lorsque ce microprocesseur ou microcalculateur est utilisé dans des applications de haute sécurité. En effet, un individu mal intentionné pourrait ainsi connaître les états successifs dans lesquels se trouve le processeur et tirer parti de ces informations pour connaître certains résultats sensibles de traitement interne.

On peut imaginer, par exemple, qu'une action donnée peut se produire à des instants différents en fonction du résultat d'une opération sécuritaire déterminée, tel que le test d'une information confidentielle interne ou le déchiffrement d'un message, ou encore le contrôle d'intégrité de certaines informations. Selon l'instant considéré, on pourrait, par exemple agir sur le processeur, ou obtenir la valeur de certains registres par investigation physique afin d'obtenir des renseignements sur le résultat ou sur le contenu confidentiel de l'information, et même dans le cas de calculs cryptographiques, sur la clé secrète de chiffrement utilisée.

Il est connu des dispositifs qui apportent un premier perfectionnement aux microcalculateurs sécurisés en les dotant de circuits qui génèrent des impulsions d'horloge aléatoires. De cette manière, l'observation des événements rend particulièrement difficiles les investigations, puisque leur synchronisation devient vite impraticable.

Cependant, ce type de solution présente de nombreux inconvénients:

Tout d'abord, la conception de tels circuits est particulièrement délicate et fastidieuse car il n'est pas possible de simuler un fonctionnement aléatoire dans la totalité d'un circuit aussi complexe qu'un microcalculateur. Il est encore plus difficile de tester ces circuits en fin de fabrication dans leur comportement brouillé. Une suite aléatoire d'impulsions d'horloge est en effet très difficile à simuler pour la mise au point des circuits, mais il est encore plus difficile de maîtriser tous les comportements de l'ensemble des circuits logiques du processeur, notamment pendant les périodes de commutation des signaux sur les bus internes et dans les registres.

C'est pourquoi un premier perfectionnement, objet de la demande de brevet français N° 9602903 du 07-03-96 de la demanderesse, intitulé "circuit intégré perfectionné, procédé d'utilisation d'un tel circuit intégré", a été apporté pour permettre un fonctionnement normal du processeur pendant les périodes de mise au point et de test avec une horloge périodique habituelle ; le processeur étant capable de commuter lui-même le mode protégé ou le mode normal. Pour assurer la sécurité, on peut facilement imaginer que ce mode ne peut être activé par le processeur que sur présentation d'un mot de passe ou d'un message chiffré ad-hoc.

En sus des difficultés citées, subsiste celle du diagnostic des pannes lors des séquences sous contrôle d'une horloge aléatoire, c'est-à- dire parfaitement désordonnée. En effet, comment peut-on, dans un tel désordre, attribuer le problème à une partie défaillante et déterminer dans quelles conditions exactes il apparaît.

On voit que l'utilisation d'une horloge aléatoire, même si elle apporte un perfectionnement théoriquement intéressant, n'apporte pas une solution parfaitement satisfaisante et surtout facile à mettre en oeuvre dans la pratique.

Les demandes EP-A-0 135 753, EP-A-0 129 693 et EP-A-0 463 855 dévoilent des systèmes de commutation de mémoires et registres pour des processeurs gérant plusieurs programmes. La demande EP-A-0 417 817 dévoile un système désynchronisant les entrées/sorties à l'aide d'horloges aléatoires. La demande EP-A-0 448 262 utilise des temporisation aléatoire lancées à partir d'un programme principal.

C'est un des buts de l'invention que de doter le processeur de moyens interdisant le type d'investigation décrit plus haut, et plus généralement d'empêcher les observations illicites du comportement interne du processeur tout en utilisant des circuits standards parfaitement maîtrisés, permettant une conception simple et un diagnostic des défauts reposant sur les méthodes classiques.

Ce but est atteint par le fait que le microprocesseur ou microcalculateur imprévisible, comprenant un processeur, une première mémoire de travail, une mémoire principale contenant un système d'exploitation, un programme principal et un programmes secondaire,
- une deuxième mémoire de travail, et
- des moyens de commutation permettant, pendant l'exécution des programmes, de commuter l'utilisation comme mémoire de travail vers l'une de ses deux mémoires de travail, tout en conservant leur contenu;
et caractérisé en ce qu'il comprend :
- des moyens de commutation comprenant au moins un bloc de registres de mémorisation du contexte de déroulement des programmes dans la mémoire principale, un circuit d'aiguillage pour la validation d'une des mémoires de travail et des registres d'accès associés à chaque mémoire et controlés par ledit circuit d'aiguillage, et
un moyen pour autoriser et/ou provoquer aléatoirement un instant de commutation du programme principal vers le programme secondaire.

Selon une autre particularité, il possède un second bloc de registres de mémorisation du contexte de déroulement du programme secondaire.

Selon une autre particularité, il possède des moyens de décorrélation du déroulement des programmes par rapport à une horloge isochrone.

Un autre but de l'invention est de faire en sorte que la mise en oeuvre de ces moyens soit assurée par le processeur lui-même, de telle sorte que la sécurité supplémentaire créée par les moyens ci-dessus ne dépende que d'une décision du système d'exploitation situé dans le microcalculateur et par conséquent soit imprévisible pour un fraudeur.

Ce but est atteint par le fait que le programme principal peut autoriser ou inhiber le ou les mécanismes de commutation, par chargement du circuit de validation des mémoires de travail et des blocs de registres de mémorisation associés à chaque mémoire de travail.

Selon une autre particularité, la deuxième mémoire de travail et ses registres d'accès se substituent, dans son utilisation par un programme principal, à la première mémoire et ses propres registres d'accès.

Un troisième but de l'invention est de rendre le temps d'exécution indépendant du programme lui-même sans pour autant être obligé d'utiliser des signaux d'horloge et de cadencement aléatoires.

Ce but est atteint par le fait que les moyens de décorrélation comprennent un générateur aléatoire permettant de déclencher par le circuit d'interruption une interruption aléatoire de désynchronisation de l'exécution des programmes dans le processeur, par branchement aléatoire sur le programme secondaire.

Selon une autre particularité, les moyens de décorrélation comprennent un système de comptage de temps indépendant du processeur 1 permettant à la fin du comptage de temps de déclencher une interruption pour revenir du programme secondaire au programme principal.

Selon une autre particularité, le moyen de commutation des mémoires de travail est commandé soit par le processeur et son programme, soit par le système d'interruption aléatoire, soit par un compteur de temps, soit encore par une combinaison quelconque d'au moins deux parmi les trois.

Un quatrième but de l'invention est d'éviter que les commutations de registres ne puissent être interprétées pour accéder directement ou indirectement aux informations sensibles.

Ce but est atteint par le fait que le moyen de commutation des mémoires de travail est validé par le chargement à partir du processeur exécutant une séquence du programme principal.

Selon une autre particularité, le programme secondaire utilise un espace de travail identique à celui du programme principal dans la mémoire principale.

Selon une autre particularité, le programme secondaire utilise un espace de travail plus petit que celui du programme principal.

Selon une autre particularité, le moyen de commutation effectue la substitution des mémoires de travail et des contextes associés, à l'intérieur du cycle d'exécution d'une instruction du microprocesseur.

Selon une autre particularité, le programme secondaire ne modifie pas le contexte général de fonctionnement du programme principal afin de permettre le retour à ce dernier sans avoir à rétablir ce contexte.

Selon une autre particularité, le contexte du programme principal est rétabli soit automatiquement par le programme secondaire, soit automatiquement par le moyen de commutation, avant de redonner le contrôle au programme principal.

Selon une autre particularité, il comporte des moyens de substitution de la mémoire du programme secondaire à la mémoire du programme principal.

Selon une autre caractéristique, le programme principal peut utiliser alternativement ou simultanément la première mémoire de travail et/ou la seconde mémoire de travail.

Selon une autre caractéristique, le chargement du circuit d'aiguillage permet le masquage ou le démasquage des interruptions de décorrélation.

Selon une autre caractéristique, le retour au programme principal s'effectue par une interruption déclenchée par le programme secondaire après que le registre d'aiguillage ait été convenablement chargé, par exécution d'une instruction du programme principal ou du programme secondaire, pour démasquer les interruptions.

Selon une autre particularité, il est réalisé dans un circuit intégré monolithique.

D'autres particularités et avantages de la présente invention apparaîtront plus clairement à la lecture de la description ci-après faite en référence aux dessins annexés dans lesquels :
La figure 1 représente le schéma électronique du circuit intégré selon un des modes de réalisation de l'invention;
La figure 2 représente le diagramme temporel de l'exécution d'instructions lors de l'apparition des interruptions et la prise en compte de l'interruption non masquée;
La figure 3 représente une variante de réalisation du circuit de chargement de l'un des registres de mémorisation du circuit intégré;
La figure 4 représente le logigramme de la partie de programme (P2) permettant le retour au fonctionnement normal du circuit.

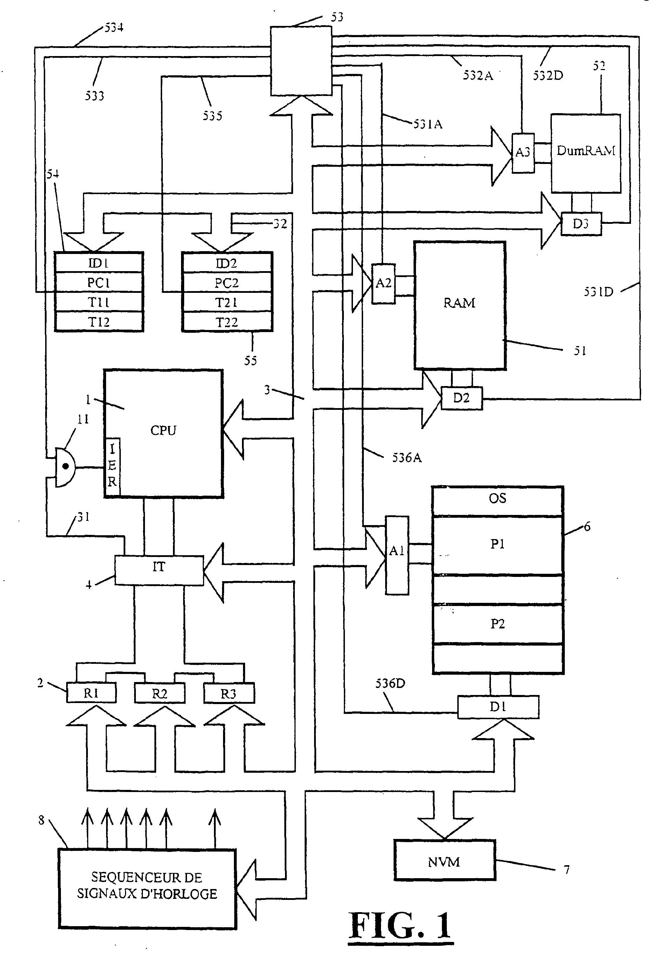

La figure 1 représente l'un des modes de réalisation de l'invention. Le microprocesseur ou microcalculateur objet de l'invention appelé SUMIC (Self Unpredictable MICrocomputer) est constitué d'un circuit intégré monolithique comportant une unité de traitement (1), d'une mémoire (6) non volatile contenant les programmes à exécuter, une mémoire RAM (51) avec ses registres d'adresse (A2) et de données (D2)ainsi que d'un générateur de signaux aléatoires ou pseudo-aléatoires (2) qui délivre, par exemple, des impulsions à intervalles irréguliers et imprévisibles, un circuit d'interruption (4), un registre (R2), un timer (R3), un circuit séquenceur (8), une mémoire non volatile (7) (NVM), une mémoire « trompe l'oeil » (dummy memory-DUMRAM) (52) du type volatile avec ses registres d'adressage (A3) et de donnée (D3), deux piles de registres (54, 55) pour mémoriser les paramètres de retour au fonctionnement normal ainsi qu'un circuit d'aiguillage (53) constitué par exemple par un registre ayant le nombre de cellules suffisant pour contrôler le fonctionnement des registres d'adresses (A1) et (A3) et de données (D1) et (D3) et un premier bloc (54) et un deuxième bloc (55) de registres de mémorisation. Ce registre d'aiguillage (53) est chargé par l'unité de traitement (1) à travers le bus (3). L'état de ce registre d'aiguillage (53) permet notamment de valider la RAM et/ou la DUMRAM dans l'espace mémoire de travail du processeur ou hors de cet espace.

Dans ce circuit intégré monolithique, l'unité de traitement est reliée par un bus (3) aux différentes mémoires vers chaque fois un registre d'adresses respectif (A1, A2, A3) et un registre de données respectif (D1, D2, D3), chacun de ces registres d'adresses et de données étant verrouillable par une ligne de commandes (531 A, 532 A, 536 A), respectivement (531 D, 532 D, 536 D), sortant du circuit d'aiguillage (53). Ce circuit d'aiguillage comporte également trois autres lignes de commande, l'une (533) aboutissant à une porte ET (11) à deux entrées, dont la deuxième entrée reçoit une ligne du bus (31) provenant du circuit d'interruption. La sortie de cette porte ET est connectée directement à l'un des bits du registre de validation d'interruption IER (Interrupt enable register) pour permettre le masquage de l'interruption déclenchée par le circuit d'interruption (4) uniquement lorsque le circuit d'aiguillage n'a pas été activé et lorsque par conséquent la ligne (533) n'est pas active.

Les deux autres lignes (534, 535) verrouillent chacune l'un des deux blocs ou piles de registres de mémorisation (54, 55). Chacun des blocs comporte une pluralité de registres de mémorisation (54), respectivement (55), permettant le stockage des informations qui seront décrites ci-après. Ces registres (54, 55) sont reliés au bus (3) commun aux mémoires. Ce même bus (3) permet le chargement du circuit d'aiguillage (53) avec les valeurs nécessaires pour rendre les lignes (531 A. 532 A, 532 D, 536 A, 536 D, 533, 534, 535) de commande actives ou inactives selon le mode de fonctionnement souhaité. La mémoire non volatile (6) contient le système d'exploitation du circuit (operating system) et un premier programme (P1) d'application, dit programme principal par la suite, ainsi qu'un second programme (P2), dénommé programme secondaire par la suite, le séquenceur (8), les registres (R2), le timer (R3) et le générateur aléatoire (R1) sont également reliés au bus (3) et les trois éléments (R1, R2, R3) sont reliés à un circuit de génération d'interruption (4), lequel est branché sur les entrées d'interruption du processeur (1) en utilisant sur le registre de masquage d'interruption (IER) du processeur un des bits qui, en général, se trouve réservé et disponible pour des applications spécifiques à certains utilisateurs.

Dans un premier mode de réalisation, le programme principal (P1) contenu en mémoire non volatile (6) modifie, lorsque nécessaire, l'état du circuit d'aiguillage (53) par l'intermédiaire du bus (3), ce qui ne présente aucune difficulté de réalisation. Ceci met momentanément hors circuit la mémoire RAM principale de travail (51) ou une partie de cette mémoire en agissant sur l'entrée CE (chip enable) de validation d'un boîtier de mémoire, ainsi que tous les registres nécessaires du premier bloc (54), pour le retour au fonctionnement normal. Ces mémoires et registres pourront être avantageusement du type statique afin d'économiser l'énergie nécessaire à leur maintien. Le circuit d'aiguillage (53) substitue donc la mémoire « trompe-l'oeil » (52) à la mémoire principale de travail (51) afin que les programmes s'exécutant utilisent exclusivement la mémoire « trompe-l'oeil-» à la place de la mémoire principale de travail. Cette mémoire « trompe-l'oeil » (52) peut être située aux mêmes adresses que la mémoire à laquelle elle se substitue, mais peut être située également à une adresse différente. Une solution avantageuse et économique consiste à utiliser une mémoire RAM de très petite taille pour cette mémoire « trompe-l'oeil ». En effet, cette mémoire « trompe-l'oeil » ne jouant aucun rôle fonctionnel pour le programme principal, on peut restreindre l'espace adressable en diminuant tout simplement la longueur du registre d'adressage (A3). On peut aussi « replier » l'adresse sur elle-même en faisant un OU-Exclusif entre plusieurs blocs du registre d'adresse. Ainsi, si l'espace adressable de la mémoire principale de travail est de 512 octets, on peut restreindre la mémoire « trompe-l'oeil » à 32 octets sans aucun problème, ce qui conduit ainsi à une réalisation très économique. Ces 32 octets peuvent correspondre, par exemple, à simplement ajouter une ligne de mémoire RAM dans la matrice de la mémoire principale de travail. Cette ligne aura dans ce cas ses propres registres d'adresse (A3) et de données (D3). Quand le circuit d'aiguillage (53) active la mémoire « trompe-l'oeil » cela peut aussi interdire tout accès en écriture dans la NVM, de façon à ne pas perturber son contenu.

On peut avantageusement, au sens de l'exécution de la commutation, utiliser alternativement deux blocs de registres, un premier bloc (54) et un second bloc (55) contenant chacun tout le contexte nécessaire à l'exécution du programme, et notamment les compteurs de programme respectivement (PC1) pour le premier bloc (54) et (PC2) pour le second bloc (55), les registres de décodage d'instruction (D1) pour le premier et (D2) pour le second ainsi que d'autres registres symbolisés par (T11,T12 et T21,T22). Ces derniers registres (T11, T12, T21 et T22) conservent les paramètres de fonctionnement, tel que par exemple le numéro du cycle machine dans lequel on doit se trouver. Tous ces registres sont commutés automatiquement par le circuit (53) d'aiguillage. Le changement d'adresse s'effectue dans ce cas instantanément, sans être obligé, comme c'est le cas dans la plupart des microcalculateurs, de sauvegarder, par une instruction spécifique, le contenu du compteur de programme dans une pile de registres. Ainsi la commutation dans les deux sens est très rapide (en général très inférieure à un cycle d'horloge), ce qui augmente considérablement le niveau de sécurité du dispositif. Le même mécanisme peut être utilisé pour les autres registres qui sauvegardent le contexte de fonctionnement du processeur, comme (T11 à T22).

Il faut bien comprendre que lorsque le programme (P1), active par le chargement du registre d'aiguillage le fonctionnement en mode « trompe-l'oeil » du circuit intégré, ce circuit d'aiguillage (53) va bloquer la première pile de registres (54), laquelle conservera les paramètres antérieurs à l'opération « trompe-l'oeil » de fonctionnement du circuit, pour redémarrer là où le programme (P1) avait été interrompu. De son côté, la seconde pile de registres (55) sera utilisée pour permettre le fonctionnement normal du circuit avec la mémoire « trompe-l'oeil » en exécution du programme (P2). Il est bien évident également que dans ce cas le bit du registre IER de masquage des interruptions, correspondant au fonctionnement en mode « trompe-l'oeil », aura été démasqué, ceci de façon à permettre, lors de la génération d'une l'interruption, soit par le générateur aléatoire, soit par le timer (R3) préalablement chargé par le générateur aléatoire avec un nombre aléatoire et à la fin de l'écoulement du temps représenté par ce nombre, soit par le registre (R2) qui aura été chargé par des informations particulières, de déclencher l'interruption (31) de passage du fonctionnement normal sous le contrôle du programme (P1) au fonctionnementen mode « trompe-l'oeil » sous le contrôle du programme (P2).

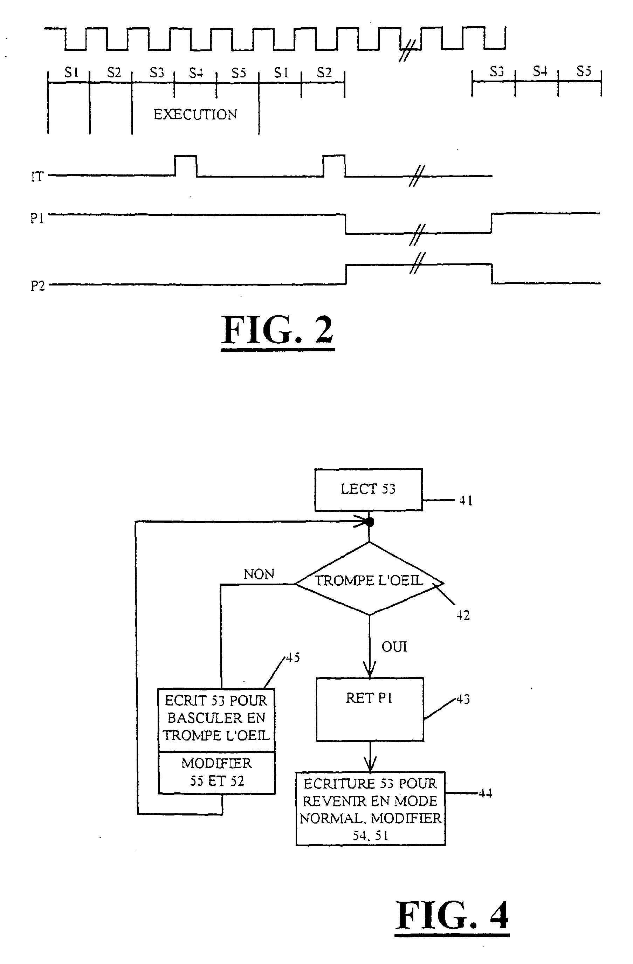

La figure 2 illustre le fonctionnement en mode interruption. Le diagramme montre qu'une première impulsion d'interruption IT, émise par le circuit d'interruption sur la ligne (31) vers l'unité de traitement (1), n est pas prise en compte car elle a été masquée en agissant sur le registre et le masquage d'interruption par une instruction "MOVE immédiat data to register IER" de chargement de donnée dans le registre de masquage. On suppose que l'instruction en cours démasque l'interruption de déroutement (mais cela peut être fait par toute autre instruction à un instant différent). La deuxième impulsion est cette fois prise en compte par l'unité de traitement (1), ce qui fait commuter le circuit d'aiguillage (53) et par voie de conséquence, le second bloc de registres (55) et la DUMRAM (52) deviennent actifs à la place du premier bloc (54) et de la mémoire « trompe-l'oeil » RAM (51). On notera que la prise en compte de l'interruption ne peut se faire que lors de la transition d'un état à un autre, par exemple entre (S2) et (S3), ceci afin de mémoriser un état stable et cohérent de la machine, et surtout de restituer exactement le même état lors du retour au programme interrompu. Si cette interruption est prise en compte, comme c'est le cas habituel, à la fin d'une instruction, il n'y a pas de problème particulier lors de la reprise du programme interrompu, puisque celle-ci s'opère normalement à l'instruction suivante. Par contre, si cette interruption a lieu en cours d'exécution d'une instruction, par exemple à l'état (S2), il faut ,bien entendu, que les circuits de séquencement soient rétablis à l'identique, de façon à enclencher correctement l'état (S3) lors de la reprise du programme interrompu. Ceci peut par exemple être réalisé par une liaison directe entre le registre (T11) et le séquenceur (8) par l'intermédiaire du bus (3) au moment de la reprise. Cette liaison peut également être spécifique sans passer par le bus (S3). On peut aussi avantageusement mettre les registres de mémorisation d'état dans le séquenceur lui-même, ce qui évite la mobilisation du bus pendant cette phase.

De cette manière, par une interruption, le programme principal (P1) peut autoriser et/ou provoquer la commutation sur un programme secondaire (P2) ainsi que décrit plus bas. Quand le programme secondaire n'est plus actif, l'état du circuit d'aiguillage (53) est changé et la mémoire de travail RAM retrouve sa configuration première sans modification, ce qui permet au programme principal de reprendre son cours exactement au point où il avait été interrompu. On peut aussi faire en sorte que lorsque le programme principal (P1) veut se protéger, il déclenche par déroutement lui-même un programmes secondaire (P2) qui engendre un traitement de longueur aléatoire à des instants choisis par lui, soit au début soit en cours de traitement de façon à brouiller les différentes séquences. Le fonctionnement du processeur peut alors être piloté par le programme secondaire (P2) qui peut, par exemple, déclencher une boucle d'attente dont le temps dépend d'un nombre aléatoire issu du générateur (2). Le programme secondaire peut s'exécuter en utilisant les parties de mémoire non utilisées par le programme principal afin que ce dernier puisse reprendre son cours normal soit dès que le programme secondaire lui transmet à nouveau le contrôle soit encore à la prochaine interruption, soit encore en utilisant le timer comme précédemment, ou soit en utilisant une combinaison des deux. Le programme secondaire peut aussi utiliser des ressources communes à condition qu'il rétablisse le contexte du programme principal avant de lui redonner le contrôle.

On pourrait être tenté de dire que ces mécanismes s'apparentent à l'exécution d'un branchement de programme principal vers un programme secondaire avec retour en fin d'exécution de ce dernier mais celui de l'invention est très différent:
- le programme secondaire n'exécute aucune fonction obligatoirement en relation avec le programme principal.
- la taille de la mémoire « trompe-l'oeil » (52) peut être beaucoup plus petite que celle nécessaire au déroulement normal d'un programme.
- le contenu de la mémoire « trompe-l'oeil » (52) n'a aucune importance car elle ne sert qu'à brouiller les pistes.
- il est possible, avec ce mécanisme rapide, d'entrelacer les instructions de programme secondaire avec celles du programme principal.
- il n'est pas nécessaire de sauver le contexte du programme secondaire, puisque ce dernier ne sert qu'à brouiller les pistes.

Dans un deuxième mode de réalisation, lorsque le processeur fait commuter le circuit (53), il active en même temps un timer (R3) initialisé soit à l'aide du générateur aléatoire (2), soit à partir du contenu de la mémoire non volatile NVM (7). Cette NVM du type E2 PROM, par exemple ou ferroélectrique, peut en effet contenir un nombre unique modifié à chaque utilisation de la NVM. Quand le timer (R3) arrive à échéance au bout d'un temps imprévisible, il déclenche le retour au programme principal en commutant aussi le circuit d'aiguillage (53) pour remettre la mémoire principale dans l'espace de travail. Ce mécanisme peut s'exécuter, soit par le biais d'une interruption classique, soit encore par une action directe du timer (R3) sur le circuit d'aiguillage (53) et par action sur les registres (PC1) et (PC2) contrôlant l'exécution des programmes par l'unité de traitement (1) tels que (PC1) et (PC2).

Dans une variante, il est possible d'utiliser pour le programme secondaire (P2), une partie quelconque du programme principal (P1) en pointant au départ sur une adresse au hasard et en réalisant une inversion des octets qui sont issus de l'adresse et/ou en inversant, par exemple, le contenu du registre (ID2) par câblage à l'envers ou encore par un circuit de décalage à gauche du contenu d'une adresse. On aura ainsi l'assurance que ce programme exécutera des instructions complètement fantaisistes.

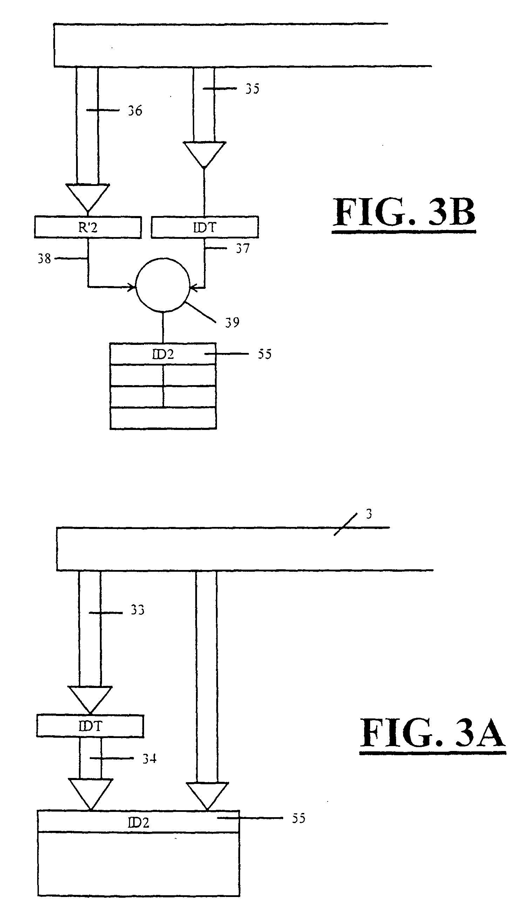

Une autre variante pour permettre l'exécution d'instructions fantaisistes pourra être constituée par la figure 3 dans laquelle un registre de décodage d'instructions temporaire IDT est relié, d'une part au bus (3) par une portion de bus (33) et d'autre-part, à la seconde pile de registres (55) permettant la mémorisation des états du circuit par une portion de bus (34). La portion de bus (34) est reliée matériellement au registre (ID2) de la pile (55) par un câblage particulier qui relie le bit (B7) du registre IDT au bit (B4) du registre (ID2), le bit (B6) du registre IDT au bit (B1) du registre (ID2), le bit (B5) du registre IDT au bit (B3) du registre (ID2), etc.

Enfin, une dernière variante permettant l'exécution (d'instructions) complètement fantaisistes est constituée par le mode de réalisation de la figure 3B dans lequel le bus (3) est relié par une portion de bus (35) au registre IDT de décodage d'instructions temporaires. Une autre portion (37) de bus relie ce registre IDT à une porte OU-Exclusif (39) à plusieurs entrées. Les autres entrées de cette porte OU étant reliées par un bus (38) à un registre (R'2) chargé par une portion (36) de bus qui le met en relation avec le bus (3). Ce registre (R'2) peut être chargé avec toute information telle que celle provenant du générateur aléatoire (R1), ou du timer, ou de la mémoire non volatile NVM (7) par une instruction "MOVE register (R1) (par exemple) to register (R'2)". Ce type d'instructions de déplacement est bien connu de l'homme de métier du domaine des microprocesseurs et ne pose aucune difficulté de mise en oeuvre. Le OU-Exclusif entre les informations provenant du registre (R'2) et les valeurs chargées dans le registre IDT permet de modifier totalement les instructions du programme (P2) et ainsi d'exécuter des instructions complètement fantaisistes.

On peut aussi utiliser dans le programme (P2) une pluralité de séquences qui seront appelées de façon aléatoire et chacune de ces séquences mettra en oeuvre un ensemble d'instructions différentes qui entraîneront un temps de traitement variable dans chaque branche et des comportements différents du microprocesseur. Les séquences pourront être appelées de façon aléatoire, par exemple, après que le programme principal ait effectué le saut au programme secondaire, ce dernier charge une valeur aléatoire V provenant de la mémoire (7) dans deux registres, par exemple, (T21) et (T22) du microprocesseur (1). Le programme secondaire incrémente cette valeur V, puis le programme commande la mémorisation de cette valeur incrémentée dans la mémoire non volatile (7). Cette valeur mémorisée dans la mémoire non volatile (7) est destinée à une utilisation ultérieure. Le programme secondaire prélève ensuite n bits de poids forts ou faibles dans (T21) afin d'obtenir une valeur r qui permettra de désigner la séquence de programme à exécuter parmi les différentes séquences de programme secondaire.

Dans un troisième mode de réalisation, le générateur aléatoire (2) est interrogeable par le processeur (1) à travers le bus (3) par une instruction de lecture afin de connaître son état, soit en lisant directement une impulsion déterminée, soit en en regroupant plusieurs, soit encore en considérant le contenu du registre (R2) chargé à partir du générateur aléatoire (2). Lorsque le programme principal veut se protéger, il passe le contrôle au programme secondaire d'une façon similaire au mécanisme vu précédemment.

Bien entendu, il est possible de combiner les effets des modes de réalisation précédents, en ayant, d'une part une horloge aléatoire et d'autre part, la possibilité d'interrompre le déroulement du programme principal, soit par lui-même, soit par un système d'interruption aléatoire qu'il autorise ou non.

On voit ainsi que le déroulement du programme principal est réalisé selon un séquencement absolument imprévisible qui dépend, soit du générateur aléatoire, soit du programme, soit du timer, soit du programme secondaire, soit encore de deux, trois ou quatre éléments à la fois. Lorsque le programme principal exécute des fonctions non sensibles sur le plan sécuritaire, il peut ainsi recourir au fonctionnement normal, par exemple pour délivrer des résultats au monde extérieur ou encore masquer les interruptions de décorrélation du timer (R3) ou du générateur aléatoire (2) de façon à optimiser le temps de traitement. Dès qu'une fonction sécuritaire est mise en oeuvre, le programme principal (P1) autorise le fonctionnement en mode aléatoire en validant les interruptions de décorrélation afin de "brouiller" le fonctionnement.

Un quatrième mode de réalisation, illustré également par la figure 1 permet d'utiliser les mémoires RAM (51) et (52) en simultanéité. En effet, si l'on suppose que l'on puisse arriver à détecter les commutations des mémoires et des registres associés, on pourrait éventuellement faire une analyse en éliminant les séquences utilisant la mémoire « trompe-l'oeil » (52). Pour éviter cet éventualité, ce mode de réalisation permet de valider simultanément les mémoires (51) et (52) en parallèle pendant une première phase. Ceci suppose, bien entendu, que la mémoire (52) possède, dans ce cas, une taille au moins égale à celle de la zone utilisée par le programme (P1) dans la mémoire (51) lorsqu'il travaille avec cette dernière. De cette manière, les contenus des deux zones de mémoire utilisées par le programme (P1) respectivement dans les mémoires (51) et (52) sont initialisés et utilisés par ce programme de façon identique pendant cette première phase. Une variante peut consister à ne valider par chargement du circuit d'aiguillage (53) avec la configuration nécessaire que l'un des deux registres (D2) ou (D3) pendant les cycles de lecture, pour éviter les éventuels conflits, mais cela ne change pas fondamentalement l'invention. On ne peut donc distinguer quelle est la mémoire qui sert réellement pendant cette phase. Il est alors possible, pendant une deuxième phase, de commuter les mémoires alternativement et de façon aléatoire par des modifications du registre du circuit d'aiguillage (53), tout en continuant d'exécuter le même programme (P1). On ne pourra donc plus corréler l'exécution d'un programme ou d'un autre avec la RAM ou les registres utilisés. Dans une troisième phase, on commute sur la mémoire « trompe-l'oeil » (52) en passant sur le programme (P2) comme décrit précédemment, et ce, à des instants imprévisibles, le retour à la mémoire principale de travail (51) s'effectue aussi à des instants imprévisibles, le processus pouvant se reproduire à volonté sous le contrôle du programme principal (T1) qui veut se protéger.

Enfin, le dernier problème posé par l'invention consiste à pouvoir quitter le mode « trompe-l'oeil » du programme (P2) pour revenir au mode de fonctionnement normal avec le programme (P1). Juste avant de passer le contrôle au programme (P2), le programme (P1) autorise les interruptions provenant soit du générateur aléatoire, soit du timer, non sans savoir initialisé ce dernier. Pendant le déroulement du programme anarchique (P2), survient alors une interruption par le circuit (4) qui passe la main à un programme d'interruption (PIT). Ce programme, qui est accédé de façon classique par l'intermédiaire d'un vecteur d'interruption, analyse par exemple le contexte d'exécution du programme en cours. Si (P2) est actif, PIT repasse le contrôle au programme (P1). Ce mécanisme peut s'effectuer de la façon suivante : lors de l'exécution des premières instructions du programme PIT, celui-ci peut par exemple être constitué, comme représenté à la figure 4, par une lecture (41) du contenu du circuit d'aiguillage (53) puis un test (42) pour déterminer si les informations contenues dans le circuit (53) correspondent au fonctionnement en mode « trompe-l'oeil ». Dans l'affirmative, le programme PIT exécute une instruction de retour au programme (P1) représenté par l'étape (43), ce retour est provoqué par l'écriture du registre d'aiguillage (53) selon l'étape (44) qui consiste à modifier les valeurs des lignes (534) et (531). Cette nouvelle écriture (44) dans le registre d'aiguillage (53) permet de revenir en mode normal modifié les valeurs de la ligne (534) et de la ligne (531) de façon à autoriser à nouveau l'utilisation de la pile (54) et de la mémoire de travail principale (51). Cette instruction de retour au programme (P1) peut s'exécuter directement après le test « trompe-l'oeil » (42) ou après l'exécution d'un certain nombre d'autres instructions non représentées qui permettent de générer un temps aléatoire. Dans le cas où le test (42) est négatif, le programme se poursuit à l'étape (45) par une écriture du registre d'aiguillage (53) pour basculer en mode « trompe-l'oeil » de façon à modifier les valeurs des lignes (535) et (532) pour autoriser l'utilisation de la pile de registre (55) et de la mémoire « trompe-l'oeil » et de façon à verrouiller les circuits commandés par les (531) et (534).

On remarquera, que dans tous ces modes de réalisation, il n'est pas nécessaire d'utiliser une horloge aléatoire. Au contraire, la distribution d'horloge peut rester tout à fait classique et isochrone, ce qui permet une conception facile des circuits ainsi que leur simulation et leur test. En fait, la sécurité ne provient plus du fait que le processeur est cadencé aléatoirement, elle se situe au niveau de l'exécution proprement dite des programmes, et ceci en synchronisme ou non avec une horloge isochrone; c'est l'exécution elle même qui est brouillée.

L'organisation des programmes exécutés par le processeur peut être réalisée de telle manière que le fonctionnement du processeur soit piloté par un véritable système d'exploitation sécuritaire qui décide du type de brouillage à mettre en oeuvre en fonction du type de programme exécuté par la machine. Dans ce cas c'est le système d'exploitation qui gère comme bon lui semble les divers signaux provenant du générateur aléatoire, des interruptions, du lancement des programmes principal et secondaire. Il est clair que le programme secondaire peut être utilisé pour réaliser d'autres fonctions qu'une simple boucle d'attente, notamment des traitements qui peuvent être utiles au programme principal, de façon à tirer parti du temps dédié au programme secondaire, ces traitements pouvant être constitués, par exemple, par des préparations de calculs utilisés ultérieurement par le programme principal. Bien entendu, on peut facilement généraliser les mécanismes de l'invention lorsque le processeur fonctionne en multi-application, les programmes d'application pouvant alors être considérés comme autant de programmes principaux.

Le générateur aléatoire et le timer vus plus haut ne posent pas de problèmes particuliers de réalisation et sont connus de l'homme de l'art lorsqu'ils sont utilisés séparément pour d'autres usages n'ayant aucun lien avec l'invention.

Pour le générateur aléatoire, on peut, par exemple, utiliser des compteurs rebouclés ayant des périodes différentes, ces compteurs étant initialisés par une information d'initialisation stockée en mémoire non volatile (7). Lorsque le processeur démarre, les compteurs prennent en compte la valeur stockée comme valeur de départ. En cours de calcul ou à la fin,z la mémoire non volatile est mise à jour avec une nouvelle valeur qui va servir d'information d'initialisation pour initialiser les compteurs à la prochaine initialisation. La génération des impulsions d'interruption vues plus haut peut alors se produire lorsque le nombre généré possède certaines caractéristiques telles que l'égalité avec certaines données du programme. On peut aussi prendre la valeur d'un ou plusieurs bits d'un ou plusieurs compteurs. Il est également possible de réaliser un très bon générateur aléatoire en utilisant un algorithme cryptographique ou une fonction de hachage, initialisés par l'information d'initialisation vue plus haut. Dans ce cas, le générateur peut être réalisé sous la forme d'un programme mettant en oeuvre l'algorithme. On voit facilement que ce générateur de nombre aléatoire peut être également utilisé pour engendrer les divers nombres aléatoires vus plus haut. Une autre manière de réaliser un tel générateur est d'amplifier la tension engendrée aux bornes d'une diode dite "de bruit" et de mettre en forme les signaux après un filtrage passe bas pour éviter que les impulsions de bruit trop rapide ne perturbent le fonctionnement du microprocesseur.

## Revendications

1. Microprocesseur ou microcalculateur imprévisible, comprenant :
- un processeur (1),
- une première (51) mémoire de travail,
- une mémoire principale (6) contenant un système d'exploitation, un programme principal (P1) et un programme secondaire (P2),
- une deuxième (52) mémoire de travail, et
- des moyens de commutation permettant, pendant l'exécution des programmes, de commuter l'utilisation comme mémoire de travail vers l'une de ses deux mémoires de travail (51, 52), tout en conservant leur contenu;
et **caractérisé en ce qu'**il comprend :
- des moyens de commutation comprenant au moins un bloc de registres (54) de mémorisation du contexte de déroulement des programmes dans la mémoire principale,
- un circuit d' aiguillage (53) pour la validation d'une des mémoires de travail et des registres d'accès (A1-A3), (D1-D3) associés à chaque mémoire (51, 52, 6) et controlés par ledit circuit d'aiguillage (53), et
- un moyen pour autoriser et/ou provoquer aléatoirement un instant de commutation du programme principal (P1) vers le programme secondaire (P2).

2. Microprocesseur ou microcalculateur imprévisible selon la revendication 1, qui possède en outre un second bloc de registres (55) de mémorisation du contexte de déroulement du programme secondaire.

3. Microprocesseur ou microcalculateur imprévisible selon la revendication 1, dans lequel le moyen pour autoriser et/ou provoquer la commutation comporte des moyens (R1, R2, R3) de décorrélation du déroulement des programmes par rapport à une horloge isochrone.

4. Microprocesseur ou microcalculateur selon la revendication 1, dans lequel le programme principal peut autoriser ou inhiber le ou les mécanismes de commutation, par chargement du circuit (53) d'aiguillage et de validation des mémoires de travail (51, 52) et des blocs de registres de mémorisation (54,55) associés à chaque mémoire de travail (51, 52) respective.

5. Microprocesseur ou microcalculateur imprévisible selon la revendication 1, dans lequel la deuxième mémoire de travail (52) et ses registres d'accès (A3, D3) se substituent dans son utilisation par un programme, à la première mémoire (51) et ses propres registres d'accès (A2, D2).

6. Microprocesseur ou microcalculateur imprévisible selon la revendication 3, dans lequel les moyens de décorrélation comprennent un générateur aléatoire (2) permettant de déclencher par un circuit d'interruption (4) une interruption aléatoire de désynchronisation de l'exécution des programmes dans le processeur, par branchement aléatoire sur le programme secondaire (P2).

7. Microprocesseur ou microcalculateur selon la revendication 3, dans lequel les moyens de décorrélation comprennent un système de comptage de temps (R3) indépendant du processeur (1) permettant à la fin du comptage de temps de déclencher une interruption pour revenir du programme secondaire au programme principal.

8. Microprocesseur ou microcalculateur imprévisible selon la revendication 3 ou 6, dans lequel le moyen de commutation (53, 54, 55, A2, A3, D2, D3)) des mémoires de travail est commandé, soit par le processeur et son programme, soit par le système d'interruption aléatoire (2, 4), soit par un compteur de temps (R3), soit encore par une combinaison quelconque d'au moins deux parmi les trois.

9. Microprocesseur ou microcalculateur imprévisible selon l'une des revendications précédentes ou de leur combinaison, dans lequel le moyen de commutation (53, 54, 55, A2, A3, D2, D3) des mémoires de travail est validé par le chargement à partir du processeur (1) exécutant une séquence du programme principal.

10. Microprocesseur ou microcalculateur imprévisible selon l'une des revendications précédentes, dans lequel le programme secondaire (P2) utilise un espace de travail identique à celui du programme principal (P1) dans la mémoire principale (6).

11. Microprocesseur ou microcalculateur imprévisible selon l'une des revendications 1 à 9, dans lequel le programme secondaire (P2) utilise un espace de travail plus petit que celui du programme principal (P1).

12. Microprocesseur ou microcalculateur imprévisible selon l'une des revendications précédentes, dans lequel le moyen de commutation effectue la substitution des mémoires de travail (51, 52, 53, 54, 55, A2, A3, D2, D3) et des contextes associés, à l'intérieur du cycle d'exécution d'une instruction du microprocesseur.

13. Microprocesseur ou microcalculateur imprévisible selon l'une des revendications précédentes, dans lequel le programme secondaire (P2) ne modifie pas le contexte général de fonctionnement du programme principal (P1) afin de permettre le retour à ce dernier sans avoir à rétablir ce contexte.

14. Microprocesseur ou microcalculateur imprévisible selon la revendication 13, dans lequel le contexte du programme principal (P1) est rétabli soit automatiquement par le programme secondaire (P2), soit automatiquement par le moyen de commutation (53), avant de redonner le contrôle au programme principal (P1).

15. Microprocesseur ou microcalculateur imprévisible selon l'une des revendications précédentes, qui comporte des moyens de substitution de la mémoire du programme secondaire (P2) à la mémoire du programme principal (P1).

16. Microprocesseur ou microcalculateur imprévisible selon l'une des revendications précédentes, dans lequel le programme principal (P1) peut utiliser alternativement ou simultanément la première mémoire de travail (51) et/ou la deuxième mémoire de travail (52).

17. Microprocesseur ou microcalculateur imprévisible selon la revendication 6, dans lequel le chargement du circuit d'aiguillage (53) permet le masquage ou le démasquage des interruptions aléatoires.

18. Microprocesseur ou microcalculateur imprévisible selon la revendication 6, dans lequel le retour au programme principal (P1) s'effectue par une interruption déclenchée par le programme secondaire (P2) après que le registre d'aiguillage (53) ait été convenablement chargé, par éxécution d'une instruction du progamme principal (P1) ou du programme secondaire (P2), pour démasquer les interruptions.

19. Microprocesseur ou microcalculateur imprévisible selon l'une des revendications précédentes, lequel est réalisé dans un circuit intégré monolithique.

## Claims

1. Unpredictable microprocessor or microcomputer, comprising:
- A processor (1)
- A first (51) working memory
- A main memory (6) containing an operating system, a main programme (P1) and a secondary programme (P2),
- A second (52) working memory, and
- Means of switching enabling, during execution of programmes, to switch the use as working memory to one of its two working memories (51, 52), while still retaining their contents;
And **characterised by** as much as it includes:
- Means of switching including at least one memory registry block (54) for the running environment of programmes in the main memory,
- A switching circuit (53) for validating one of the working memories and access registries (A1-A3), (D1-D3) associated with each memory (51, 52, 6) and controlled by the said switching circuit (53), and
- A means to permit and/or randomly cause momentary switching from the main programme (P1) to the secondary programme (P2).

2. Unpredictable microprocessor or microcomputer according to claim 1, which in addition possesses a second memory registry block (55) for the running environment of the secondary programme.

3. Unpredictable microprocessor or microcomputer according to claim 1, in which the means of permitting and/or causing switching includes means (R1, R2, R3) for decorrelation of the running of programmes by comparison with an isochronous clock.

4. Microprocessor or microcomputer according to claim 1, in which the main programme can permit or prevent the mechanism(s) of switching, by loading the switching circuit (53) and validation of working memories (51, 52) and memory registry blocks (54, 55) associated with each respective working memory (51, 52).

5. Unpredictable microprocessor or microcomputer according to claim 1, in which the second working memory (52) and its access registries (A3, D3) replaces in its use by a programme the first memory (51) and its own access registries (A2, D2).

6. Unpredictable microprocessor or microcomputer according to claim 3, in which the means of decorrelation include a random generator (2) enabling the triggering by an interrupt circuit (4) of a random desynchronisation interrupt for execution of programmes in the processor, by random branching on the secondary programme (P2).

7. Unpredictable microprocessor or microcomputer according to claim 3, in which the means of decorrelation include a system for counting time (R3) independent of the processor (1) enabling at the end of the countdown the triggering of an interrupt to return from the secondary programme to the main programme.

8. Unpredictable microprocessor or microcomputer according to claim 3 or 6, in which the means of switching (53, 54, 55, A2, A3, D2, D3) working memories is controlled, either by the processor and its programme, or by the random interrupt system (2, 4), or by a time counter (R3), or even by any combination whatever of at least two among the three.

9. Unpredictable microprocessor or microcomputer according to one of the preceding claims or their combination, in which the means of switching (53, 54, 55, A2, A3, D2, D3) working memories is validated by loading from the processor (1) executing a sequence of the main programme.

10. Unpredictable microprocessor or microcomputer according to one of the preceding claims, in which the secondary programme (P2) uses an identical working space to that of the main programme (P1) in the main memory (6).

11. Unpredictable microprocessor or microcomputer according to one of claims 1 to 9, in which the secondary programme (P2) uses a smaller working space than that of the main programme (P1).

12. Unpredictable microprocessor or microcomputer according to one of the preceding claims, in which the means of switching performs the substitution of working memories (51, 52, 53, 54, 55, A2, A3, D2, D3) and the associated environments, inside the execution cycle of an instruction of the micro-processor.

13. Unpredictable microprocessor or microcomputer according to one of the preceding claims, in which the secondary programme (P2) does not change the general operating environment of the main programme (P1) in order to enable return to the latter without having to re-establish this environment.

14. Unpredictable microprocessor or microcomputer according to claim 13, in which the environment of the main programme (P1) is re-established, either automatically by the secondary programme (P20, or automatically by the means of switching (53), before returning control to the main programme (P1).

15. Unpredictable microprocessor or microcomputer according to one of the preceding claims, which includes the means for substitution of the memory for the secondary programme (P2) with the memory for the main programme (P1).

16. Unpredictable microprocessor or microcomputer according to one of the preceding claims, in which the main programme (P1) can alternately or simultaneously use the first working memory (51) and/or the second working memory (52).

17. Unpredictable microprocessor or microcomputer according to claim 6, in which the loading of the switching circuit (53) enables masking or unmasking of random interrupts.

18. Unpredictable microprocessor or microcomputer according to claim 6, in which the return to the main programme (P1) is performed by an interrupt triggered by the secondary programme (P2) after the switching registry (53) has been suitably loaded, by execution of an instruction in the main programme (P1) or the secondary programme (P2), to unmask the interrupts.

19. Unpredictable microprocessor or microcomputer according to one of the preceding claims, which is made in a monolithic integrated circuit.

## Patentansprüche

1. Unvorhersehbarer Mikroprozessor oder Mikrorechner, umfassend
- einen Prozessor (1),
- einen ersten (51) Arbeitsspeicher,
- einen Hauptspeicher (5) der ein Betriebssystem, ein Hauptprogramm (P1) und ein Sekundärprogramm (P2) enthält,
- einen zweiten (52) Arbeitsspeicher, und
- Schaltmittel, die es während der Programmausführungen ermöglichen, die Anwendung als Arbeitsspeicher auf einen ihrer zwei Arbeitsspeicher (51, 52) durchzuschalten, wobei ihr Inhalt erhalten bleibt;
und **dadurch gekennzeichnet, dass** er
- Schaltmittel mit mindestens einem Registerblock (54) zur Speicherung des Ablaufumfelds der Programme im Hauptspeicher,
- eine Weichenschaltung (53) zur Validierung einer der Arbeitsspeicher und der jedem Speicher (51, 52, 6) zugeordneten und durch die genannte Weichenschaltung (53) gesteuerten Zugriffsregister (A1 A3), (D1-D3).
- ein Mittel, um zufällig einen Schaltzeitpunkt des Hauptprogramms (P1) auf das Sekundärprogramm (P2) freizugeben und/oder zu bewirken umfasst.

2. Unworhersehbarer Mikroprozessor oder Mikrorechner nach Anspruch 1, der außerdem über einen zweiten Registerblock (55) zur Speicherung des Ablaufumfelds des Sekundärspeichers verfügt.

3. Unvorhersehbarer Mikroprozessor oder Mikrorechner nach Anspruch 1, in welchem das Mittel um die Durchschaltung freizugeben und/oder zu bewirken Dekorrelationsmittel (R1, R2, R3) zur Dekorrelation des Programmablaufs gegenüber einer Isochronuhr aufweist.

4. Mikroprozessor oder Mikrorechner nach Anspruch 1, in welchem das Hauptprogramm das Schaltmechanismus oder die Schaltmechanismen durch Laden der Weichenschaltung (53) und Validierungsschaltung der Arbeitsspeicher (51, 52) und der und jedem Arbeitsspeicher (51, 52) zugeordneten Speicherungs-Blockregister (54, 52) freigeben oder sperren kann.

5. Unvorhersehbarer Mikroprozessor oder Mikrorechner nach Anspruch 1, in welchem der zweite Arbeitsspeicher (52) mit seinen Zugriffsregistern (A, D3) bei seinem Einsatz durch ein Programm den ersten Speicher (51) und seine eigenen Zugriffsregister (A2, D2) ersetzt.

6. Unvorhersehbarer Mikroprozessor oder Mikrorechner nach Anspruch 3, in welchem die Dekorrelationsmittel einen Zufallsgenerator (2) umfassen, der es ermöglicht über einen Abschaltkreis (4) ein zufälliges Abschalten der Entsynchronisierung der Programmausführung im Prozessor, durch zufälligen Anschluss auf das Sekundärprogramm (P₂) auszulösen.

7. Unvorhersehbarer Mikroprozessor oder Mikrorechner nach Anspruch 3, in welchem die Dekorrelationsmittel ein vom Prozessor (1) unabhängiges Zeitzählersystem (R3) umfassen, das es ermöglicht, nach erfolgter Zeitzählung ein Abschalten auszulösen, um vom Sekundärsystem in das Hauptsystem zurückzukehren.

8. Unvorhersehbarer Mikroprozessor oder Mikrorechner nach Ansprüche 3 oder 6, in welchem das Schaltmittel (53, 54, 55, A2. A3, D2. D3) für die Arbeitsspeicher entweder vom Prozessor und seinem Programm, entweder vom zufälligen Abschaltmittel (2, 4) oder von einem Zeitzähler (R3) oder auch durch eine beliebige Kombination von wenigstens zwei der drei letzten gesteuert wird.

9. Unvorhersehbarer Mikroprozessor oder Mikrorechner nach einem der vorangehenden Ansprüche oder ihrer Kombination, in welchem das Schaltmittel (53, 54, 55, A2. A3, D2. D3) für die Arbeitsspeicher durch das Laden aus dem Prozessor (1), der einen Programmbereich des Hauptprogramms ausführt, validiert wird.

10. Unvorhersehbarer Mikroprozessor oder Mikrorechner nach Anspruch 1, in welchem das Sekundärprogramm (P2) einen Arbeitsbereich benutzt, der mit diesem des Hauptprogramms (P1) im Hauptspeicher (6) identisch ist.

11. Unvorhersehbarer Mikroprozessor oder Mikrorechner nach einem der Ansprüche 1 bis 9, in welchem das Sekundärprogramm (P2) einen Arbeitsbereich benutzt, der kleiner ist als dieser des Hauptprogramms (P1).

12. Unvorhersehbarer Mikroprozessor oder Mikrorechner nach einem der vorangehenden Ansprüche, in welchem das Schaltmittel das Ersetzen der Arbeitsspeicher (51, 52, 53, 54. 55, A2, A3) und der zugeordneten Umfelde innerhalb des Befehlsablaufs eines Befehls des Mikroprozessors ausführt.

13. Unvorhersehbarer Mikroprozessor oder Mikrorechner nach einem der vorangehenden Ansprüche, in welchem das Sekundärprogramm (P2) das allgemeine Betriebsumfeld des Hauptprogramms (P1) nicht ändert, um die Rückkehr in das letzte ohne dass es nötig ist, das Umfeld wiederherzustellen zu ermöglichen.

14. Unvorhersehbarer Mikroprozessor oder Mikrorechner nach Anspruch 13, in welchem das Umfeld des Hauptprogramms (P1) entweder automatisch durch das Sekundärprogramm (P2), oder automatisch durch das Schaltmittel (53) wiederhergestellt wird, um dem Hauptprogramm (P1) wieder die Kontrolle zu geben.

15. Unvorhersehbarer Mikroprozessor oder Mikrorechner nach einem der vorangehenden Ansprüche, das Ersatzmittel für den Ersatz des Hauptprogramms (P1) durch das Sekundärprogramm (P2) aufweist.

16. Unvorhersehbarer Mikroprozessor oder Mikrorechner nach einem der vorangehenden Ansprüche in welchem das Hauptprogramm (P1) den ersten Arbeitsspeicher (51) oder den zweiten Arbeitsspeicher (52) alternativ oder gleichzeitig benutzen kann.

17. Mikroprozessor oder Mikrorechner nach Anspruch 6, in welchem das Laden der Weichenschaltung (63) die Maskierung und die Demaskierung der zufälligen Abschaltvorgänge ermöglicht.

18. Unvorhersehbarer Mikroprozessor oder Mikrorechner nach Anspruch 6, in welchem die Rückkehr in das Hauptprogramm (P1) durch ein durch das Sekundärprogramm (P2) ausgelöstes Abschalten erfolgt, nachdem das Weichenregister (53) durch Ausführung eines Befehls des Hauptprogramms (P1) oder des Sekundärprogramms (P2), um die Abschaltvorgänge zu demaskieren richtig geladen wurde.

19. Unvorhersehbarer Mikroprozessor oder Mikrorechner nach einem der vorangehenden Ansprüche, der in einem monolithischen integrierten Schaltkreis ausgeführt wird.
